Europäisches Patentamt

European Patent Office

Office européen des brevets

⑩

(11) Publication number: **0 168 540**
**B1**

(12) **EUROPEAN PATENT SPECIFICATION**

(45) Date of publication of patent specification: **15.03.89**

(21) Application number: **84309055.6**

(22) Date of filing: **21.12.84**

(51) Int. Cl.⁴: **F 16 H 11/06**

(54) Apparatus for controlling continuously variable transmission used in vehicle.

(30) Priority: **18.07.84 JP 147676/84**

(43) Date of publication of application:
**22.01.86 Bulletin 86/04**

(45) Publication of the grant of the patent:
**15.03.89 Bulletin 89/11**

(84) Designated Contracting States:
**DE FR GB**

(56) References cited:
**EP-A-0 059 426**
**EP-A-0 061 735**
**EP-A-0 063 786**
**EP-A-0 093 312**
**JP-A-59 144 849**
**JP-A-60 088 256**
**US-A-4 458 318**

(73) Proprietor: **TOYOTA JIDOSHA KABUSHIKI KAISHA**
**1, Toyota-cho Toyota-shi**
**Aichi-ken 471 (JP)**

(72) Inventor: **Itoh, Hiroshi**
**1, Toyota-cho**
**Toyota-shi Aichi-ken (JP)**
Inventor: **Takada, Mitsuru**
**1, Toyota-cho**
**Toyota-shi Aichi-ken (JP)**
Inventor: **Sasaoka, Hiroshi**
**1, Toyota-cho**
**Toyota-shi Aichi-ken (JP)**
Inventor: **Inagaki, Takahumi**
**1, Toyota-cho**
**Toyota-shi Aichi-ken (JP)**
Inventor: **Masutomi, Susumu**
**1, Toyota-cho**
**Toyota-shi Aichi-ken (JP)**

(74) Representative: **Ben-Nathan, Laurence Albert et al**
**Urquhart-Dykes & Lord 91 Wimpole Street**
**London W1M 8AH (GB)**

Courier Press, Leamington Spa, England.

## Description

This invention relates to an apparatus for controlling a continuously variable transmission (hereinafter referred to as "CVT") used for a transmission of an engine power.

In our JP—A—59 144 849 published on 20.8.1984 is disclosed a CVT controlling apparatus which sets a desired engine speed in a transient conditions separately from a desired engine speed in a steady time. According to that controlling apparatus, when an intake throttle position $\theta$ is abruptly changed, a desired engine speed No is held at a desired engine speed Ns for steady state before the change in $\theta$ within a predetermined time Ta from that change time and is changed stepwise by the product $B \cdot \Delta Ns$ of difference $\Delta Ns$ between Ns before and Ns after the change in $\theta$ multiplied by a constant B (provided $0<B<1$) after a predetermined time Ta to improve the responsive property while thereafter the desired engine speed No is gradually changed toward Ns after the change in $\theta$.

The predetermined time Ta is provided to confirm whether or not a driver's intention of request for the speed change of acceleration or deceleration is true, while an inconvenience is encountered that the presence of the predetermined time Ta gives an impression of delayed acceleration to the driver when the abrupt acceleration like kickdown is requested. Also, when the driver pedals an accelerator pedal for at least the predetermined time Ta, the stepped change in No may be less than a proper value to bring a shortage of initial acceleration.

On the other hand, in our JP—A—60 88256 published on 18.5.1985 the desired engine speed No is abruptly changed instead of the stepped change at every $\Delta t$ [$\Delta t$ is time taken for converting the analog output to the digital value of a throttle position sensor with an A/D (analog/digital) converter or its integral multiple] within a first time succeeding the predetermined time Ta (including Ta=O) and after the passage of the first time No is gently changed toward Ns after the completion of change in $\theta$. In this case, the variation $\Delta No$ in No at every $\Delta t$ within the first time is the product $B \cdot \Delta Nr$ of the reference value $\Delta Nr$ and said constant B, while the difference between Ns before and after $\Delta t$, the difference between the present Ns and No before $\Delta t$ or the difference between the present Ns and the actual engine speed Ne are selected as the reference value $\Delta Nr$. However, since the constant B is preset to a value adapted to the variation $\Delta\theta$ in $\theta$ before and after the change in $\theta$, No within the first time is disadvantageously gradually deviated from a proper value.

An object of the present invention is to provide an apparatus for controlling a CVT which is to set properly a desired engine speed in a transient condition without giving drive feeling like bad responsive property to a driver in a period when the request for abrupt speed change is addressed.

According to the present invention to achieve this object, there is provided an apparatus as claimed in claim 1.

Thus, the desired engine speed No at respective times in the period when the request for abrupt speed change of acceleration or deceleration is addressed assumes the difference Nc2−Nc1 between Nc2 of Ns at these times and Nc1 of Ns immediately before the request for abrupt acceleration is addressed or No as the reference value $\Delta Nr$ to be set to the sum value $Nc1+B \cdot \Delta Nr$ of the product $B \cdot \Delta Nr$ of the constant B and $\Delta Nr$ plus Nc1. The constant B is set on the basis of the variations of running parameters before the request for abrupt speed change is addressed and after same has been addressed, and since $\Delta Nr$ is the difference Nc2−Nc1 between Nc2 and Nc1, a proper No is set at each time while the deviation of No accompanying the accumulation of errors is to be avoided.

Also, the detection of the final values of the running parameters accompanying the request for abrupt speed change is not needed so that the desired engine speed No is to be set to that at the transient condition immediately after the request for abrupt acceleration is addressed so as to give a satisfactory drive feeling.

Preferably, the desired engine speed Ns for steady state is calculated on the basis of the intake throttle position $\theta$ or the intake throttle position $\theta$ and vehicle speed V.

Preferably, the request for abrupt speed change is detected from the intake throttle position $\theta$, and when the absolute value $|\Delta\theta|$ of difference $\Delta\theta$ between the intake throttle position $\theta$ at the present time and the intake throttle position $\theta$ before a predetermined time Tc exceeds a predetermined value X1 for example, the request for abrupt speed change is judged to be addressed.

The accompanying drawings, which are incorporated in and constitute part of this specification, illustrate embodiments of the invention and, together with the description, serve to explain the principles of the invention.

In the drawings:—

Fig. 1 is a schematic view showing the whole CVT;

Fig. 2 is a block diagram showing an electronic control unit;

Fig. 3 is a flow chart showing a routine for selecting a control pattern of the CVT;

Figs. 4 and 5 are graphs showing the characteristics of a desired engine speed for steady state;

Fig. 6 is a view showing the change with the passage of time of the desired engine speed when the request for abrupt acceleration is addressed;

Fig. 7 is a flow chart showing a routine for calculating the desired engine speed; and

Fig. 8 is a functional block diagram showing an apparatus according to the present invention.

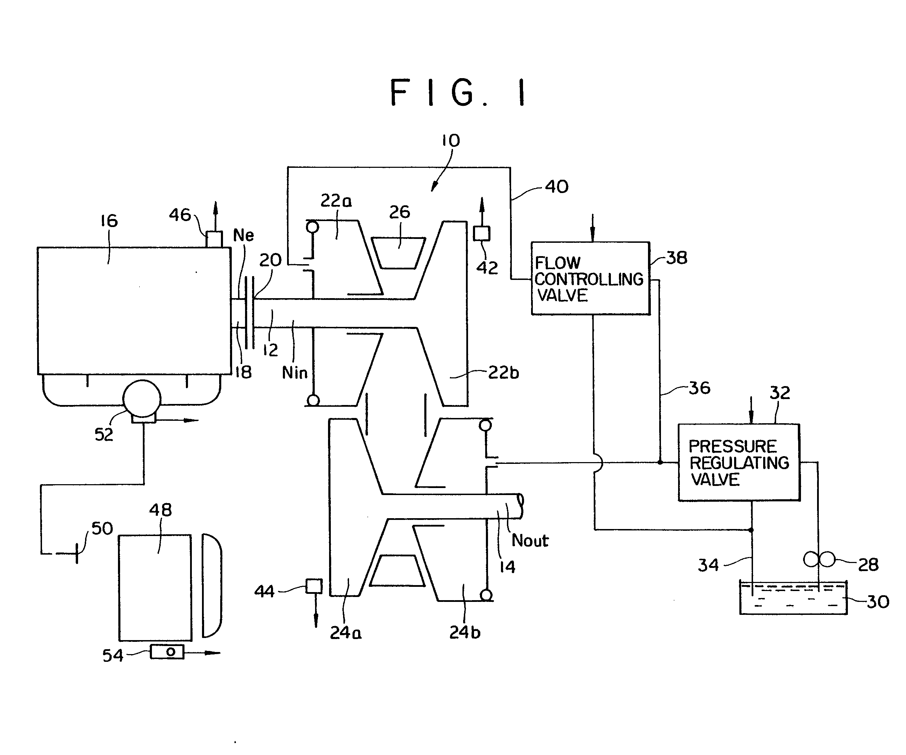

In Fig. 1, a CVT 10 is provided with an input shaft 12 and an output shaft 14 parallel to each other. The input shaft 12 is provided coaxially with a crankshaft 18 of an engine 16 and connected to the crankshaft 18 through a clutch 18.

Input side pulleys 22a, 22b are provided opposed to each other, one input side pulley 22a being provided on the input shaft 12 as a movable pulley to move axially and be fixed rotationally and the other input side pulley 22b being secured fixedly to the input shaft 12 as a fixed pulley. Similarly, output side pulleys 24a 24b are provided opposed to each other, one output side pulley 24a being secured fixedly to the output shaft 14 as a fixed pulley and the other output side pulley 24b being provided on the output shaft 14 as a movable pulley to move axially and be fixed rotationally. Opposed surfaces of the input and output side pulleys 22a, 22b and 24a, 24b are formed tapered and a belt 26 having an equilateral trapezoidal section is trained over the input and output side pulleys 22a, 22b and 24a, 24b. An oil pump 28 sends oil from an oil reservoir 30 to a pressure regulating valve 32 which is constituted from an electromagnetic relief valve to control line pressure in an oil path 36 by varying escaping amount of oil to a drain 34 so that the line pressure in the oil path 36 is sent to the hydraulic cylinder and a flow controlling valve 38 of the output side pulley 24b. The flow controlling valve 38 controls oil flow supplied from the oil path 36 to an oil path 40 connected to a hydraulic cylinder of the input side pulley 22a and oil flow drained from the oil path 40 to the drain 34. The press forces of the input and output side pulleys 22a, 22b and 24a, 24b against the belt 26 are controlled by oil pressure in the input side hydraulic cylinder and the output side hydraulic cylinder to vary the engaging radii of the belt 26 on the tapered surfaces of the input and output side pulleys 22a, 22b and 24a, 24b in relation to these press forces. As a result, the speed ratio e (=Nout/Nin) is provided, Nout is the rotational speed of the output shaft 14 and Nin the rotational speed of the input shaft 12. In this embodiment, Nin=engine speed Ne of the CVT 10 is varied. That is, when the speed ratio e is increased, oil is supplied from the flow controlling valve 38 to the input side hydralulic cylinder and when the speed ratio e is decreased, oil is drained from the input side hydraulic cylinder through the flow controlling valve 38. The line pressure in the output side hydraulic cylinder is controlled to a necessary minimum value to avoid the slip of the belt and ensure the power transmission for the purpose of restraining the drive loss of the oil pump 28, and the speed ratio e is controlled by oil pressure in the input side hydraulic cylinder. Further, while oil pressure in the input side hydraulic cylinder ≤ oil pressure in the output side hydraulic cylinder, since pressure receiving area of the input side hydraulic cylinder > pressure receiving area of the output side hydraulic cylinder, the press force of the input side pulleys 22a, 22b is to be made larger than that of the output side pulleys 24a, 24b. An input side rotational angle sensor 42 and an output side rotational angle sensor 44 detect respectively the rotational speeds Nin, Nout of the input shaft 12 and the output shaft 14, and a water temperature sensor 46 detects cooling water temperature in the engine 16. In a driver's seat 48 is provided an accelerator pedal 50 interlocked with a throttle valve in an intake path and a throttle position sensor 52 detects the throttle position θ. A shift position sensor 54 detects the shift range of a shift lever near the driver's seat.

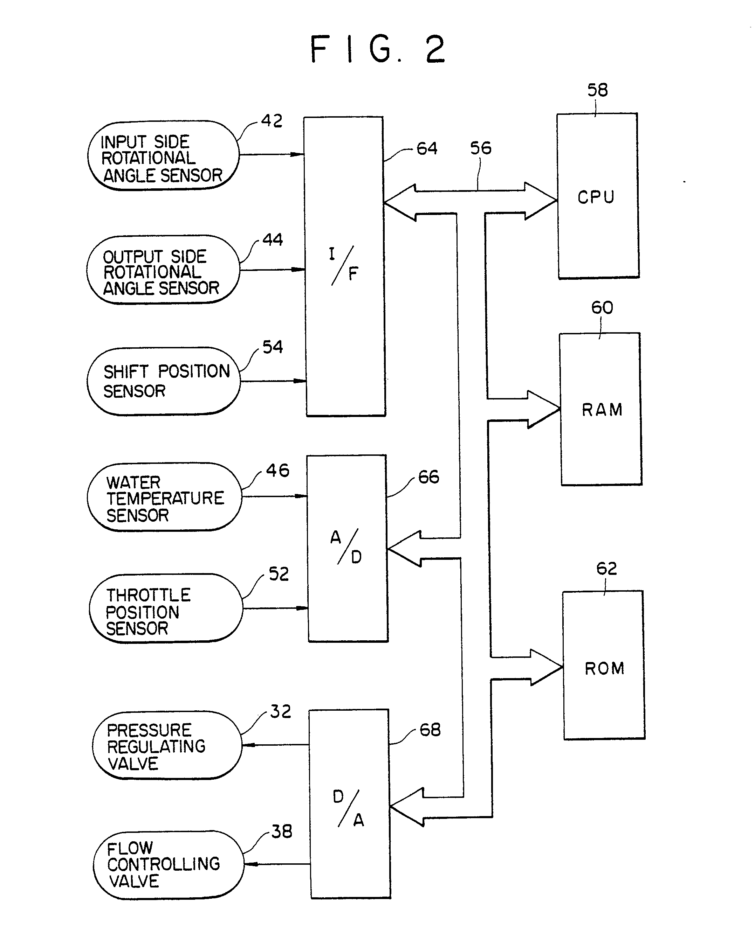

Fig. 2 is a block diagram showing an electronic control unit. An address data bus 56 interconnects CPU 58, RAM 60, ROM 62, I/F (interface) 64, A/D (analog/digital converter) 66 and D/A (digital/ analog converter) 68. The I/F 64 receives pulse signals from the input side rotational angle sensor 42, the output side rotational angle sensor 44 and the shift position sensor 54, and the A/D 66 receives analog signals from the water temperature sensor 46 and the throttle position sensor 52. The D/A 68 generates the pulse signal outputs to the valve 32 and the flow controlling valve 38.

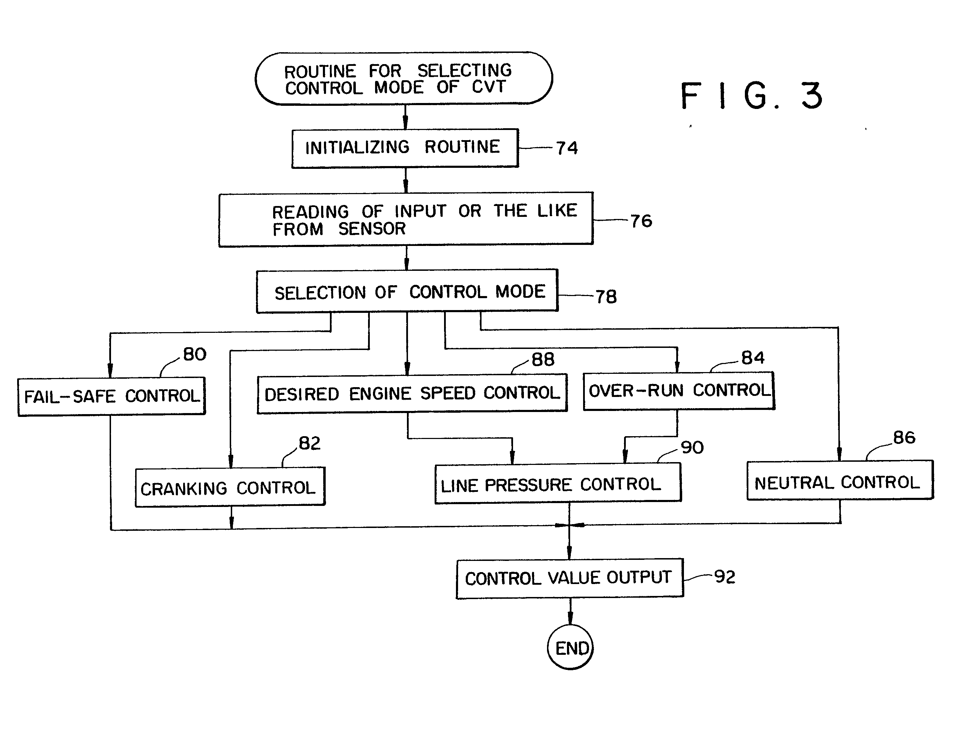

Fig. 3 is a flow chart showing a control pattern selecting routine of the CVT. In step 74 is executed an initializing routine by which various data are set to proper initial values. In step 76 are read inputs and necessary data from various sensors. In step 78 are selected control mode from the inputs and data read in step 76. According to the read inputs and data, fail-safe control in step 80 is executed if any abnormalities is found in the engine, sensors or the like, cranking control in step 82 is executed during starting, over-run control in step 84 is executed during over-run, neutral control in step 86 is executed in neutral range and the desired engine speed control in step 88 is executed in other cases. By respective controls in steps 80 to 88 is calculated the proper speed ratio e of the CVT 10. In the cases of the over-run control in step 84 and the desired engine speed control in step 88 the line pressure is also controlled in step 90 to calculate the proper line pressure Pl. In step 92 are generated the control values corresponding to the calculated values in steps 80 to 90.

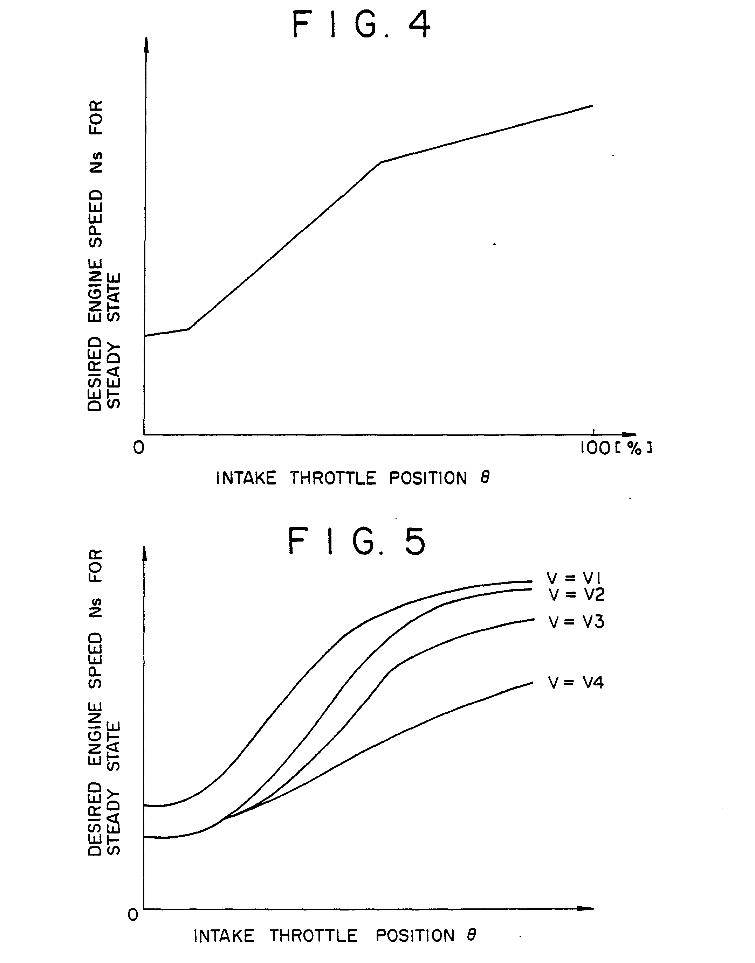

Fig. 4 shows the desired engine speed Ns for steady state as a function of the intake throttle position θ. The throttle position θ is an increase function of pedalling amount of accelerator pedal, and the engine speed Ne is steady state where the engine output corresponding to the throttle position θ is generated with a minimum specific fuel consumption is set as the desired engine speed Ns for steady state.

Fig. 5 shows another example of the desired engine speed Ns for steady state. Since the necessary engine output varies with vehicle speed V, Ns shown in Fig. 5 is corrected in relation to the vehicle speed V on the basis of Ns in Fig. 4, provided V1>V2>V3>V4.

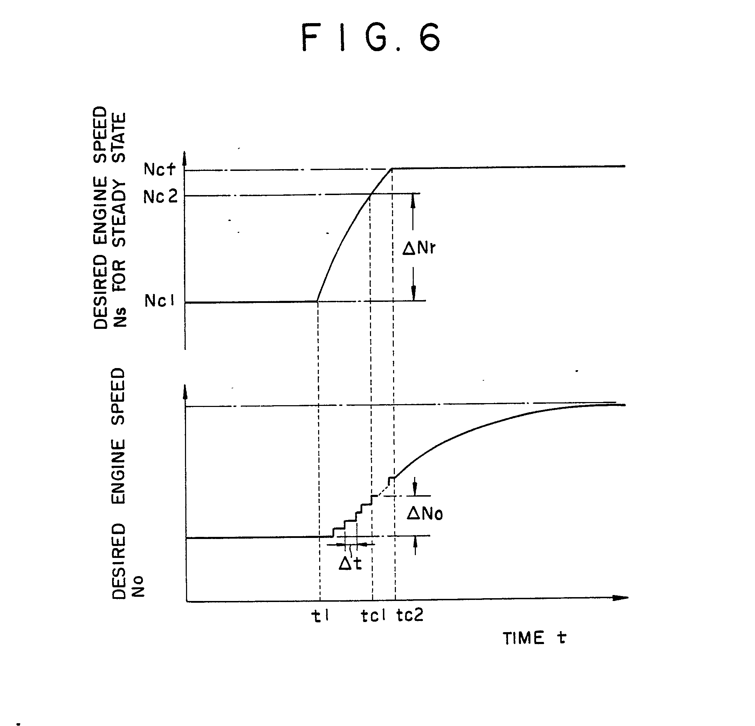

Fig. 6 shows the change in the desired engine speed No when a driver abruptly pedals the accelerator pedal. The desired engine speed No is renewed every passage of time Δt, provided Δt is a time taken for the A/D 66 converting the analog output of the throttle position sensor 52 to the digital value by the A/D 66 or its multiple.

Since the change in the throttle position θ before time t1 is gentle, the desired engine speed No is calculated from the following formula:

$$No = No' + D1 \cdot (Ns - No') \pm D2 \qquad (1)$$

provided

No' is the desired engine speed No before renewal, i.e. previously calculated.

Ns is the desired engine speed for steady state corresponding to the present time value of parameters ($\theta$ in Fig. 4 and $\theta$, V in Fig. 5)

D1, D2 are constants.

Further,

$$D1 \cdot (Ns - No') \pm D2 \approx 1/100(Ns - No'),$$

and No calculated before time t1 according to the formula (1) is considered equal to Ns.

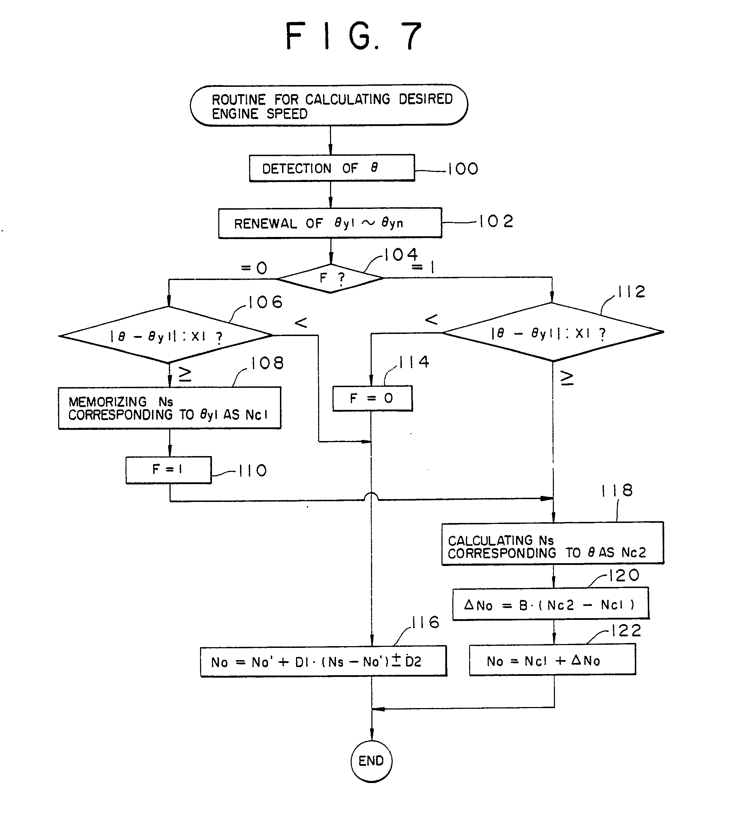

The throttle position $\theta$ from time t1 to t2 is abruptly increased. Accordingly, Ns is also abruptly increased. As soon as Ns enters a period when the request for abrupt speed change is addressed from time t1, Ns or No immediately or slightly before the time t1 is detected to be set to a first Nc1. In the embodiment in Fig. 7 which will be described later, Ns for $\theta y1$ is made Nc1 so that Nc1 becomes Ns before time $(n-1) \cdot \Delta t$. Further, as described previously, No $\approx$ Ns.

A method of calculating the desired engine speed No within a period from time t1 to t2 will be described. The desired engine speed Ns for steady state related to $\theta$ in time tc1 or $\theta$ and V is set to a second value Nc2. Nc2 $-$ Nc1 is set to the reference value $\Delta Nr$, and the product $B \cdot \Delta Nr$ of the constant B and the reference value $\Delta Nr$ is set to a correction value $\Delta No$. Finally, the sum Nc1 $+$ $\Delta No$ of Nc1 plus $\Delta No$ is set to the desired engine speed No in time tc1. That is, No is calculated from the following formula:

$$No = Nc1 + B \cdot (Nc2 - Nc1) \qquad (2)$$

The change in the throttle position $\theta$ is completed in time t2 and accordingly, Ns is also held constant on and after time t2. Assuming the desired engine speed Ns for steady state corresponding to the running parameter value in time t2 is Ncf, the desired engine speed No is defined by the formula (1) or another formula to change gradually toward Ncf on and after time t2. (Further, D1, D2 values in the formula (1) is set to values different from ones in steady state only in this case. The larger D1 is, the larger the gradient is). As a result, No within the period from t1 to t2 is released from effects of accumulation due to errors produced at every $\Delta t$ in the Japanese Patent Application No. Sho 58-194191, and set to a proper value of Nc1 plus $\Delta No$ as a proper step variation in each time.

Fig. 7 is a flow chart showing a routine for calculating the desired engine speed according to the description of Fig. 6. This routine is executed every interval of time $\Delta t$.

Initially the intake throttle position $\theta$ is detected (step 100) to renew data $\theta y1$, $\theta y2$, $\theta yn$ (step 102). That is, $\theta y2$ is substituted for $\theta y1$, $\theta y3$ substituted for $\theta y2$, ... $\theta yn$ substituted for $\theta yn-1$ and $\theta$ substituted for $\theta yn$. Accordingly, $\theta y1$ becomes $\theta$ before time Tc, $\theta y2$ becomes $\theta$ before time $(Tc - \Delta t)$, ... $\theta yn-1$ becomes $\theta$ before time $\Delta t$ and $\theta yn$ becomes $\theta$ at the present time. The intake throttle position $\theta$ is detected at every $\Delta t$, and $\theta$ from the present time to time Tc is stored in the RAM 60 so that $\theta$ is erased after time $(Tc + \Delta t)$ has elapsed.

Next is judged flag F (step 104). As will be described later, when the request for abrupt speed change is addressed, F=1 is provided, and when the request for abrupt speed change is completed, F=O is provided. When F=O, that is, when the desired engine speed in the transient condition is still set at the previous time, the absolute value $|\theta - \theta y1|$ of the difference $\theta - \theta y1$ between $\theta$ at the present time and $\theta y1$ and $\theta$ before time Tc is compared with a predetermined value X1 (step 106). When $|\theta - \theta y1| < X1$, that is, in a period when the request for abrupt speed change is not addressed, the desired engine speed No is calculated according to said formula (1).

When $|\theta - \theta y1| \geq X1$, that is, when the request for abrupt speed change is addressed, the desired engine speed Ns for steady state corresponding to $\theta y1$ is stored as a first value Nc1 (step 108), while the flag F is set (step 110) and then the desired engine speed No is calculated according to said formula (2) (steps 118, 120, 122).

When F=1, that is, when the desired engine speed in the transient condition has been set at the previous time, $|\theta - \theta y1|$ is compared with X1 (step 112). When $|\theta - y1| < X1$, that is, when the request for abrupt acceleration has been already completed, the flag F is reset (step 114) and No is calculated according to the formula (1) (step 116). When $|\theta - \theta y1| \geq X1$, that is, when the request for abrupt speed change is still continued, No is calculated according to the formula (2) (step 118, 120, 122).

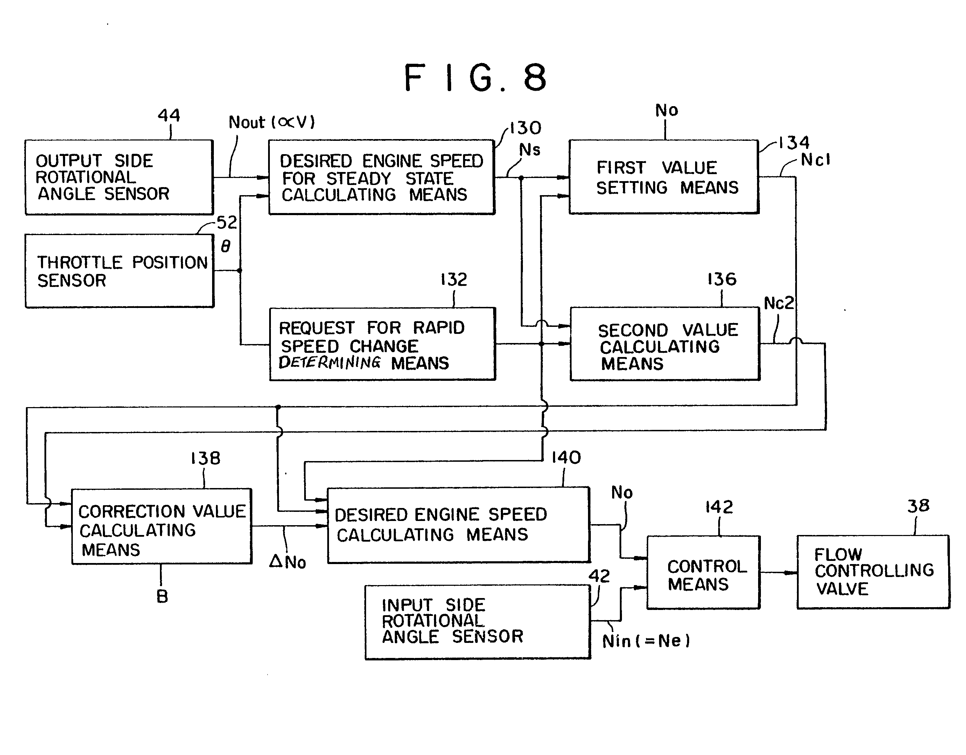

Fig. 8 is a functional block diagram showing the apparatus according to the present invention. The output side rotational speed Nout of the CVT 10 detected by the output side rotational angle sensor 44 is proportional to the vehicle speed V. A desired engine speed for steady state calculating means 130 calculates the desired engine speed Ns for steady state from the vehicle speed V and the throttle position $\theta$ on the basis of the graph in Fig. 4 or 5. An abrupt speed change request detecting means 132 detects the request for abrupt speed change from the change in the throttle position $\theta$. A first value setting means 134, when the request for abrupt speed change is detected, sets as the first value Nc1, the desired engine speed Ns for steady state prior to the detection of the request for abrupt speed change or the desired engine speed No. A second value calculating means 136 calculates the desired engine speed Ns for steady state at the present time as the second value Nc2. A correction value calculating means 138 calculates the product $B \cdot (Nc2 - Nc1)$ of the constant B and Nc2 $-$ Nc1 as the correction value $\Delta No$. A desired engine speed calculating means 140 substitutes Nc1 $+ \Delta No$ for

the desired engine speed No while the request for abrupt speed change is detected. A control means 142 controls the flow controlling valve 38 on the basis of the difference between the desired engine speed No and the actual engine speed Ne and changes the speed ratio e of the CVT 10 such that Ne becomes No.

## Claims

1. An apparatus for controlling a continuously variable transmission (CVT) used in a vehicle which controls an engine speed Ne or speed ratio e of continuously variable transmission such that it becomes a desired value, comprising:

means (130) for calculating a desired engine speed for steady state in relation to a parameter representative of an operating amount of an accelerator pedal in accordance with a predetermined relationship therebetween;

means (132) for determining when a request for an abrupt speed change exists;

means (134) for setting a desired engine speed for steady state before the request for abrupt speed change is determined or for setting a desired engine speed No as a first value Nc1;

means (136) for calculating a desired engine speed for steady state corresponding to said parameter at the time being, as a second value Nc2;

means (138) for calculating a correction value $\Delta$No from said first and second values using the expression $B \cdot (Nc2 - Nc1)$, where B is a constant B; and

means (140, 142) using said correction value $\Delta$No for controlling a flow control valve (38) of the CVT so as to control the speed ratio e of the CVT to set the engine speed Ne as $Nc1 + \Delta No$ while said request for abrupt speed change exists.

2. An apparatus as defined in Claim 1, wherein said parameter is an intake throttle position $\theta$.

3. An apparatus as defined in claim 1 or claim 2, wherein said predetermined relationship (Figure 5) is also dependent on the vehicle speed V.

4. An apparatus as defined in any of Claims 1 to 3, wherein the request for abrupt speed change is determined from the intake throttle position $\theta$.

5. An apparatus as defined in Claim 4, wherein the request for abrupt speed change is judged to be addressed when the absolute value $|\Delta\theta|$ of the difference $\Delta\theta$ between the intake throttle position $\theta$ at the time being and the intake throttle position $\theta$ prior to a predetermined time Tc exceeds a predetermined value X1.

## Patentansprüche

1. Einrichtung zur Steuerung einer stufenlos regelbaren Übertragung (CVT) in einem Fahrzeug, mit dessen Hilfe eine Motordrehzahl Ne oder ein Drehzahlverhältnis e einer stufenlos regelbaren Übertragung so gesteuert werden kann, daß ein gewünschter Wert erzielt wird, umfassend:

Vorrichtungen (130), um eine gewünschte Motordrehzahl zur Erreichung eines stabilen Zustands im Verhältnis zu einem einer bestimmten Gaspedalstellung entsprechenden Parameter gemäß einem vorbestimmten Verhältnis zwischen beiden Größen zu berechnen;

Vorrichtungen (132), um zu bestimmen, wann die Notwendigkeit einer abrupten Drehzahländerung besteht;

Vorrichtungen (134), um eine gewünschte Motordrehzahl einzustellen, damit ein stabiler Zustand erreicht werden kann, bevor die Notwendigkeit einer abrupten Drehzahländerung festgestellt wird, oder damit eine gewünschte Motordrehzahl No als ein erster Wert Nc1 eingestellt werden kann;

Vorrichtung (136), um eine gewünschte Motordrehzahl zur Erreichung eines stabilen Zustands entsprechend dem vorliegenden genannten Parameter als einen zweiten Wert Nc2 zu berechnen;

Vorrichtungen (138), um einen Korrektorwert $\Delta$No aus den genannten ersten und zweiten Werten mit Hilfe der Formel $B \times (Nc2 - Nc1)$ zu berechnen, wobei B eine Konstante B ist; und

Vorrichtungen (140, 142), um mit Hilfe des genannten Korrekturwertes $\Delta$No ein Mengenregelventil (38) der stufenlos regelbaren Übertragung steuern zu können, um so das Drehzahlverhältnis e der stufenlos regelbaren Übertragung so zu steuern, daß die Motordrehzahl Ne als $Nc1 + \Delta No$ eingestellt werden kann, wenn die genannte Notwendigkeit einer abrupten Drehzahländerung besteht.

2. Einrichtung gemäß Anspruch 1, wobei es sich bei dem genannten Parameter um eine Einlaßdrosselposition $\theta$ handelt.

3. Einrichtung gemäß Anspruch 1 oder Anspruch 2, wobei das genannte vorbestimmte Verhältnis (Abb. 5) auch von der Fahrzeuggeschwindigkeit V abhängt.

4. Einrichtung gemäß irgendeinem der Ansprüche 1 bis 3, wobei die Notwendigkeit einer abrupten Drehzahländerung über die Einlaßdrosselposition $\theta$ bestimmt wird.

5. Einrichtung gemäß Anspruch 4, wobei die Beurteilung der Notwendigkeit einer abrupten Drehzahländerung dann eingeleitet wird, wenn der absolute Wert $|\Delta\theta|$ der Differenz $\Delta\theta$ zwischen der vorliegenden Einlaßdrosselposition 0 und der Einlaßdrosselposition $\theta$ vor einer vorbestimmten Zeit Tc einen vorbestimmten Wert X1 übersteigt.

## Revendications

1. Un dispositif de commande d'une transmission à variation continue, (CVT) utilisée sur un véhicule pour commander une vitesse de moteur Ne ou un rapport de vitesse e de la transmission continuellement variable, de façon qu'elle atteigne une valeur souhaitée, comprenant:

des moyens (130) pour calculer une vitesse de moteur souhaitée en régime régulier en liaison avec un paramètre représentif d'une quantité d'actionnement d'une pédale d'éccélérateur, en fonction d'une relation préétablie relaint ces deux facteurs.

des moyens (132) pour déterminer quand existe une demande de changement brutal de vitesse.

des moyens (134) pour fixer une vitesse de moteur souhaitée en régime régulier ayant que la demande de changement abrupt de vitesse ne soit déterminée ou pour fixer une vitesse de moteur souhaitée No à une première valeur Nc1.

des moyens (136) pour calculer une vitesse de moteur souhaitée, correspondant au régime régulier et audit paramètre en temps réel, comme seconde valeur $N_{c2}$.

des moyens (138) pour calculer une valeur de correction ΔNo à partir desdites premières et deuxièmes valeurs en utilisant l'expression $B \cdot (N_{c2} - N_{c1})$, où B est une constante B; et

des moyens (140, 142) utilisant ladite valeur de correction ΔNo pour contrôler une valve de commande de débit (38) de la CTV, de façon à commander le rapport de vitesse e de la CTV pour placer la vitesse de moteur Ne selon $N_{c1} + \Delta No$ lorsque ladite demande de variation brutale de vitesse existe.

2. Un dispositif tel que défini dans la revendication 1 dans lequel ledit paramètre est une position de papillon d'admission θ.

3. Un dispositif selon la revendication 1 ou 2, dans lequel ladite relation prédéterminée (Fig. 5) dépend également de la vitesse du véhicule V.

4. Un dispositif tel que défini dans l'une quelconque des revendications 1 à 3, dans lequel la demande d'un changement brutal de vitesse est déterminée par la position de papillon d'admission θ.

5. Un dispositif tel que défini à la revendication 4 dans lequel on estime que le changement brutal de vitesse doit être adressé quand la valeur absolue |Δθ| de la différence Δθ entre la position instantanée de papillon d'admission θ et la position de papillon d'admission θ avant une durée prédéterminée Tc, excède une valeur prédéterminée X1.

F I G. I

# F I G. 2

# F I G. 3

ROUTINE FOR SELECTING CONTROL MODE OF CVT

74 — INITIALIZING ROUTINE

76 — READING OF INPUT OR THE LIKE FROM SENSOR

78 — SELECTION OF CONTROL MODE

80 — FAIL-SAFE CONTROL

82 — CRANKING CONTROL

84 — OVER-RUN CONTROL

86 — NEUTRAL CONTROL

88 — DESIRED ENGINE SPEED CONTROL

90 — LINE PRESSURE CONTROL

92 — CONTROL VALUE OUTPUT

END

EP 0 168 540 B1

# F I G. 4

DESIRED ENGINE SPEED Ns FOR STEADY STATE

INTAKE THROTTLE POSITION $\theta$

100 [ % ]

# F I G. 5

DESIRED ENGINE SPEED Ns FOR STEADY STATE

V = V1
V = V2
V = V3
V = V4

INTAKE THROTTLE POSITION $\theta$

4

# F I G. 6

DESIRED ENGINE SPEED Ns FOR STEADY STATE

Ncf

Nc2

ΔNr

Ncl

DESIRED ENGINE SPEED No

ΔNo

Δt

tl    tcl tc2

TIME t

5

# F I G. 7

ROUTINE FOR CALCULATING DESIRED
ENGINE SPEED

DETECTION OF $\theta$ —— 100

RENEWAL OF $\theta_{y1} \sim \theta_{yn}$ —— 102

F ? —— 104
= 0                = 1

$|\theta - \theta_{y1}| : X1$ ? —— 106                $|\theta - \theta_{y1}| : X1$ ? —— 112

<                <

$\geq$                $\geq$

MEMORIZING Ns
CORRESPONDING TO $\theta_{y1}$ AS Nc1 —— 108

F = 0 —— 114

F = 1 —— 110

CALCULATING Ns
CORRESPONDING TO $\theta$ AS Nc2 —— 118

$\Delta$No = B·( Nc2 − Nc1 ) —— 120

No = No' + D1·( Ns − No') $\pm$ D2 —— 116                No = Nc1 + $\Delta$No —— 122

END

6

# FIG. 8

OUTPUT SIDE ROTATIONAL ANGLE SENSOR (44)

Nout (∝V)

THROTTLE POSITION SENSOR (52)

θ

DESIRED ENGINE SPEED FOR STEADY STATE CALCULATING MEANS (130)

Ns

No

FIRST VALUE SETTING MEANS (134)

Ncl

REQUEST FOR RAPID SPEED CHANGE DETERMINING MEANS (132)

SECOND VALUE CALCULATING MEANS (136)

Nc2

CORRECTION VALUE CALCULATING MEANS (138)

B

ΔNo

DESIRED ENGINE SPEED CALCULATING MEANS (140)

No

CONTROL MEANS (142)

FLOW CONTROLLING VALVE (38)

INPUT SIDE ROTATIONAL ANGLE SENSOR (42)

Nin (=Ne)

EP 0 168 540 B1